# EUROPEAN PATENT SPECIFICATION

(11) **EP 4 722 556 B1**
(45) Date of publication and mention of the grant of the patent: **23.09.2026**
(21) Application number: 24204227.3
(22) Date of filing: 02.10.2024
(51) Int. Cl.: F16D 65/38, F16D 65/56, B61H 15/00

(54) **BRAKE ASSEMBLY FOR A RAIL VEHICLE**
BREMSANORDNUNG FÜR EIN SCHIENENFAHRZEUG
ENSEMBLE DE FREINAGE POUR UN VÉHICULE FERROVIAIRE

(43) Date of publication of application: 08.04.2026
(73) Proprietor: Dellner Bubenzer AB, 781 70 Borlänge (SE)
(72) Inventor: LUNDELL, Anders, 443 32 LERUM (SE)
(74) Representative: Brann AB

(56) References cited:
- EP-A1- 1 479 579
- WO-A1-03/067114
- DE-A1- 2 723 984
- DE-B4- 102010 023 700
- US-A1- 2015 114 771

## Description

### TECHNICAL FIELD

The present invention relates generally to retardation arrangements for rail vehicles. Especially, the invention relates to a brake assembly according to the preamble of claim 1.

### BACKGROUND

In operation of a rail vehicle, the onboard motors or engines may be engaged as engine brakes to decelerate the rail vehicle. For example, in an electrically powered rail vehicle, the electric engines may be employed as generators to reduce the speed. However, for efficiency and safety reasons, one cannot rely solely on this type of braking strategy. In particular, a dedicated brake function will always be needed to ensure emergency braking functionality and that the rail vehicle remains stationary after that it has been brought to a stop. In many cases, the same brake units are used for different types of braking functionality, such as service braking, emergency braking and parking braking.

Typically, the brake unit includes a rotating member mechanically linked to a wheel axle of the rail vehicle plus one or more friction members arranged to be pressed against the rotating member to decelerate the rail vehicle. Specifically, it is the contact between the friction material, i.e. the lining in the brake pads or shoes that creates frictional contact with the rotating member, e.g. a disc or a drum, and causes the desired amount of braking torque to slow down the rail vehicle. Repeated braking operations progressively wear away friction material, which results in a progressively thinner brake lining. As the friction material wears, the distance between the brake lining and the rotating member increases. The increase in distance increases the amount of mechanical travel required to engage the brake. This, in turn, translates into an extended delay before the friction members make contact with the rotating member. In other words, the rail vehicle will travel a longer distance before deceleration begins. Of course, this is an undesired effect.

Various prior solutions are known to adjust and accommodate for the wearing of the brake lining, such that the friction members maintain a desired idle distance from the rotating member.

US 6,896,106 shows a method of accommodating wear in an electrically operated brake assembly that includes setting a home position when a brake shoe engages a brake drum. A stepper motor drives the brake shoes into engagement with the drum. Upon engagement of the brake shoes with the drum, the stepper motor slips. Slipping of a stepper motor indicates that a home position has been reached. Upon release of the brake, the brake shoe is moved away from the drum a fixed distance. The fixed distance is an optimal distance between the friction member and the rotating member such that regardless of wear, the distance relationship between the brake shoe and drum is maintained. Although this strategy may be useful, as such, it is exclusively usable for electrically operated brakes and therefore has a limited field of application.

EP 3 683 468 shows a wear adjuster of a compact brake caliper unit, in particular for rail vehicles, that has an adjuster housing, an adjuster yoke, a threaded drive with a spindle and a pressure nut that can be screwed onto the spindle. The wear adjuster is designed as a pneumatic wear adjuster and has a control device of an adjustment cylinder of the wear adjuster, wherein the control device comprises a valve device. The valve device contains an inlet valve and a controlled outlet valve, which control the adjustment cylinder with the pressure medium of the brake cylinder as a drive of the wear adjuster. This design is only applicable to pneumatically operated brakes and relies on a relatively complex interaction of various pneumatic components.

WO 03/067114 shows a disc brake, in particular for commercial vehicles with a pivoting or displaceable brake caliper, an actuation device and at least one adjustment device on both sides of the brake disc is characterized in that the brake caliper comprises bearing housings on the underside thereof. Support elements, which are arranged on the wheel axle, engage in the bearing housings. At least one elastically-deformable spacer element is provided between bearing housing and support element.

### SUMMARY

The object of the present invention is to offer an uncomplicated and generically applicable solution for wear adjustment of rail vehicle brakes, such that a rail vehicle may experience a consistent and reliable braking behavior regardless of the wear of the friction members.

According to the invention, the object is achieved by a brake assembly for a rail vehicle, which brake assembly contains: a rotating member, first and second friction members, an actuator and an adjuster mechanism. The rotating member is mechanically linked to a wheel axle of the rail vehicle. Thus, the rotating member may for example be represented by a brake disc or the wheel itself. The first and second friction members are movable between a respective engaged position in which they contact the rotating member from opposing first and second sides respectively, and a respective disengaged position in which they are positioned at an idle distance from the rotating member. The actuator is arranged to obtain a control signal and in response thereto control the first and second friction members to attain the respective engaged position. The adjuster mechanism is configured to control the first and second friction members such that in the disengaged position the friction members are positioned within a joint margin range from the idle distance notwithstanding any wear of the first and second friction members. The adjuster mechanism contains a probing arrangement mechanically linked to the first and second friction members. The probing arrangement is arranged to control the friction members such that an activated distance by which the first and second friction members are separated from one another in the respective engaged position decreases according to a monotonic function as the friction members are worn. Specifically, the probing arrangement is configured to set the activated distance by an interaction between a slidable member and a fixed-position member arranged to interact with one another along a contact profile that comprises at least one angled segment. The adjuster mechanism further contains a ratcheted control screw that is mechanically linked to the first and second friction members. The ratcheted control screw is arranged to be rotated by the interaction between the slidable member and the fixed-position member so as to gradually reduce the activated distance in response to the first and second friction members being worn.

The above-described brake assembly is advantageous because it is fully self-adjusting. For instance, this means that it is not even necessary to set an initial idle distance for the friction members after replacement thereof. Namely, provided that the friction members are not mounted too close to the rotating member the friction members will automatically be positioned at the set idle distance after a few braking procedures. The wear adjustment may also be effected automatically without the involvement of any complex control mechanisms.

According to one embodiment of the invention, the first friction member is attached to a first arm that is rotatably attached to a first joint which, in turn, is eccentrically mounted on a rotatable member rotatably attached to a primary joint that is fixedly mounted in the brake assembly, and the second arm is rotatably attached to a second joint that is fixedly mounted in the brake assembly. This asymmetric attachment of the arms, or calipers, in the brake assembly results in a somewhat uncommon behavior of the arms, which enables various advantages that will be discussed below.

For example, according to one embodiment of the invention, the adjuster mechanism contains the rotatable member. Here, the slidable member is rotatably attached to the first joint, such that a movement of the first arm by rotation of the a rotatable member around the primary joint causes the slidable member to move together with the first arm. In this movement, both ends of the first arm translate in a direction being essentially parallel to one another. After that the first friction member has been brought into contact with the rotatable member the second arm will start to move the second friction member towards the rotatable member, and when also the second friction member contacts the rotatable member full brake force is applicable.

According to another embodiment of the invention, the fixed-position member includes a contact element, and the slidable member contains the at least one angled segment of the contact profile plus a straight-line segment of the contact profile. Here, each of the straight-line segment and the at least one angled segment is arranged to interact with the contact element during operation of the brake assembly. The straight-line segment is further arranged to interact with the contact element such that the first and second friction members are movable between the respective engaged and disengaged positions without causing an adjustment of the ratcheted control screw, if, in the respective disengaged position, the first and second friction members are positioned within the joint margin range from the idle distance. The at least one angled segment is arranged to interact with the contact element, such that the activated distance is reduced to an extent that depends on how long a distance the at least one angled segment of the contact profile slides against the fixed-position member during the braking procedure. Hence, the at least one angled segment controls the wear adjustment in a very straightforward manner.

According to yet another embodiment of the invention, the slidable member instead includes the contact element and the fixed-position member contains the at least one angled segment of the contact profile plus a straight-line segment of the contact profile. Analogous to the above, each of the straight-line segment and the at least one angled segment is arranged to interact with the contact element, and the straight-line segment is arranged such that the first and second friction members are movable between the respective engaged and disengaged positions without causing an adjustment of the ratcheted control screw, if, in the respective disengaged position, the first and second friction members are positioned within the joint margin range from the idle distance. Also here, the at least one angled segment is arranged to interact with the contact element, such that the activated distance is reduced to an extent that depends on how long a distance the contact element slides against the at least one angled segment. Thus, the at least one angled segment controls the wear adjustment in a very straightforward manner.

According to still another embodiment of the invention, the at least one angled segment includes a set of teeth and the contact element contains a rotatable gear-toothed member arranged to engage into the set of teeth of the at least one angled segment so as to in response to said engagement cause the adjustment of the ratcheted control screw. This is beneficial because the gear engagement renders the coupling between the contact element of the at least one angled segment mechanically efficient. For the same reasons the straight-line segment should preferably also include a set of teeth.

According to a another embodiment the invention, the adjuster mechanism further contains a shaft member connecting the probing arrangement to the ratcheted control screw. The shaft member is arranged to cause a rotation of the ratcheted control screw in response to the interaction between the slidable member and the fixed-position member along the at least one angled segment of the contact profile.

Preferably, the slidable member and the fixed-position member are configured such that when each of the first and second friction members is positioned in the respective disengaged position the slidable member and the fixed-position member contact one another at a point on the straight-line segment of the contact profile. If, when the first and second friction members are positioned in the respective engaged positions, the activated distance exceeds an adjustment threshold, the slidable member and the fixed-position member contact one another at a point on the straight-line segment of the contact profile. As a result, no wear adjustment will be made. However, if, when the first and second friction members are positioned in the respective engaged positions, the activated distance is equal to or subceeds the adjustment threshold, the slidable member and the fixed-position member contact one another at a point on the angled segment of the contact profile, thus causing a translational movement of the shaft member along its symmetry axis such that the ratcheted control screw is rotated, and thus wear adjustment is performed. This mechanism ensures that the set idle distance is maintained regardless of how the friction members are worn down.

According to a further embodiment of the invention, the ratcheted control screw is arranged between first and second pivot joints, where the first pivot joint is rotatably attached to the first arm and the second pivot joint is rotatably attached to the second arm. Additionally, the ratcheted control screw is arranged such that rotation thereof, for example so that the ratcheted control screw expands, causes the first and second pivot joints to be separated from one another, the second arm to rotate around the second joint and the first and second friction members to approach one another. Hence, the ratcheted control screw directly influences the operation of the first and second arms, such that the first and second friction members are always positioned at the idle distance in the disengaged position notwithstanding any wear of the friction members.

According to one embodiment of the invention, the angled segment has a convex, straight or concave shape directed towards the symmetry axis of the shaft member in such a way that the longer the slidable member slides along the fixed-position member over the angled segment the further the shaft member is caused to move away from the fixed-position member along its symmetry axis thus causing the ratcheted control screw to rotate around its axis in a first direction.

According to an alternative embodiment of the invention, the angled segment has a concave, straight or convex shape directed towards the symmetry axis of the shaft member in such a way that the longer the slidable member slides along the fixed-position member over the angled segment the further the shaft member is instead caused to move towards the fixed-position member along its symmetry axis thus causing the ratcheted control screw to rotate around its axis in a second direction, which may be opposite the first direction. However, preferably in both these alternative embodiments, the ratcheted control screw is designed so that said respective rotation results in that the ratcheted control screw expands.

In the latter of the two above embodiments, the brake assembly preferably contains a compressible member arranged to push the slidable member towards the fixed-position member while allowing the slidable member to slide along the fixed-position member. Namely, this ensures that slidable member remains in contact with the fixed-position member throughout the entire brake procedure.

Alternatively, the fixed-position member may include a guide track configured to lead the slidable member in the fixed-position member throughout a braking procedure, wherein the first and second friction members are moved between the respective engaged and disengaged positions. Here, the guide track contains first and second straight-line segments and first and second angled segments that are arranged to lead the slidable member in the guide track, such that the slidable member is in contact with at least one of said segments at each point in time during the braking procedure. Thus the slidable member remains in contact with the fixed-position member throughout the entire brake procedure.

According to still another embodiment of the invention, the ratcheted control screw is configured to reduce the activated distance between the first and second friction members continuously.

Alternatively, the ratcheted control screw may instead be configured to reduce the activated distance between the first and second friction members according to a stepwise procedure. Preferably, two consecutive steps in the stepwise procedure are here separated from one another by an increment equivalent to less than or equal to the joint margin range. Namely, this ensures that the idle distance lies within an acceptable range.

According to yet other embodiments of the invention, the actuator is configured to be operated pneumatically or hydraulically in response to receiving the control signal as a variation in a fluid pressure level, or the actuator is configured to be operated electromechanically in response to receiving the control signal on an electrical format. In other words, the brake assembly is useful together with any existing technology for controlling rail vehicle brakes.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figures 1a-b: schematically illustrate a rail vehicle brake assembly according to a first embodiment of the invention when the friction members are disengaged and engaged respectively;
- Figure 1c: schematically illustrates the brake assembly of Figures 1a and 1b when being adjusted for wear of the friction members;
- Figures 2 - 4: show different embodiments of a proposed probing mechanism wherein a fixed-position member contains at least one angled segment of a contact profile, and a slidable member interacting therewith causes a shaft member to act on a ratcheted control screw in a first direction;
- Figure 5: shows a free-wheel arrangement for manipulating a ratcheted control screw according to a first embo- diment of the invention;
- Figure 6: schematically illustrates a rail vehicle brake according to a second embodiment of the invention;
- Figures 7 - 9: show different embodiments of a proposed probing mechanism wherein the fixed-position member contains at least one angled segment of a contact profile, and a slidable member interacting therewith causes a shaft member to act on a ratcheted control screw in second direction;
- Figure 10: shows a free-wheel arrangement for manipulating the ratcheted control screw according to a second embodiment of the invention;
- Figure 11: illustrates how an activated distance between the friction members may be adjusted for wear according to a stepwise procedure;
- Figure 12: illustrates how the activated distance between the friction members may be adjusted for wear according to a continuous procedure; and
- Figure 13: schematically illustrates a rail vehicle brake according to a third embodiment of the invention.

### DETAILED DESCRIPTION

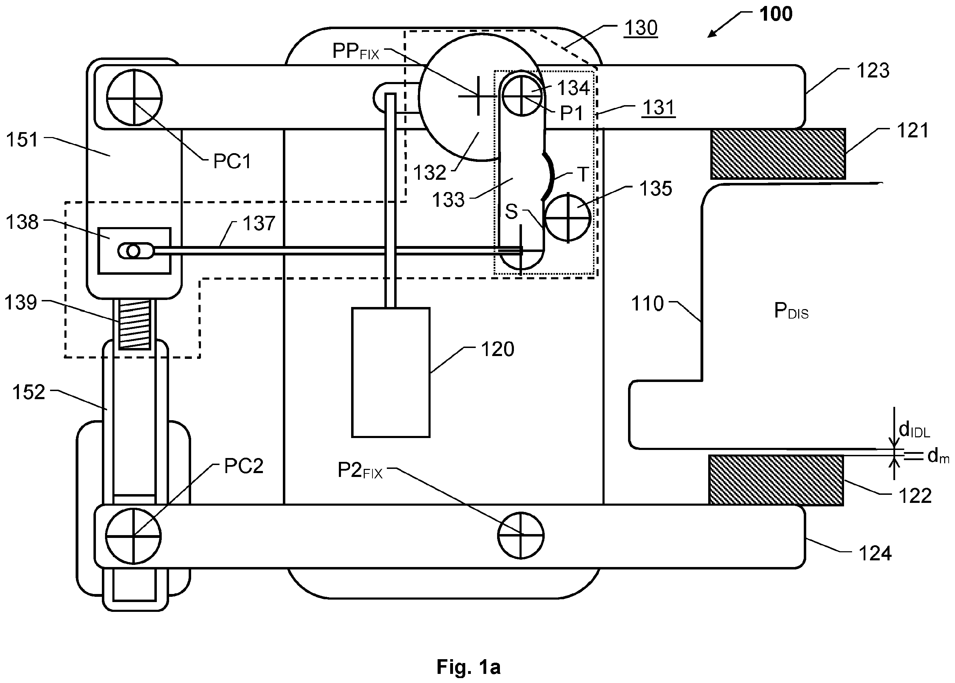

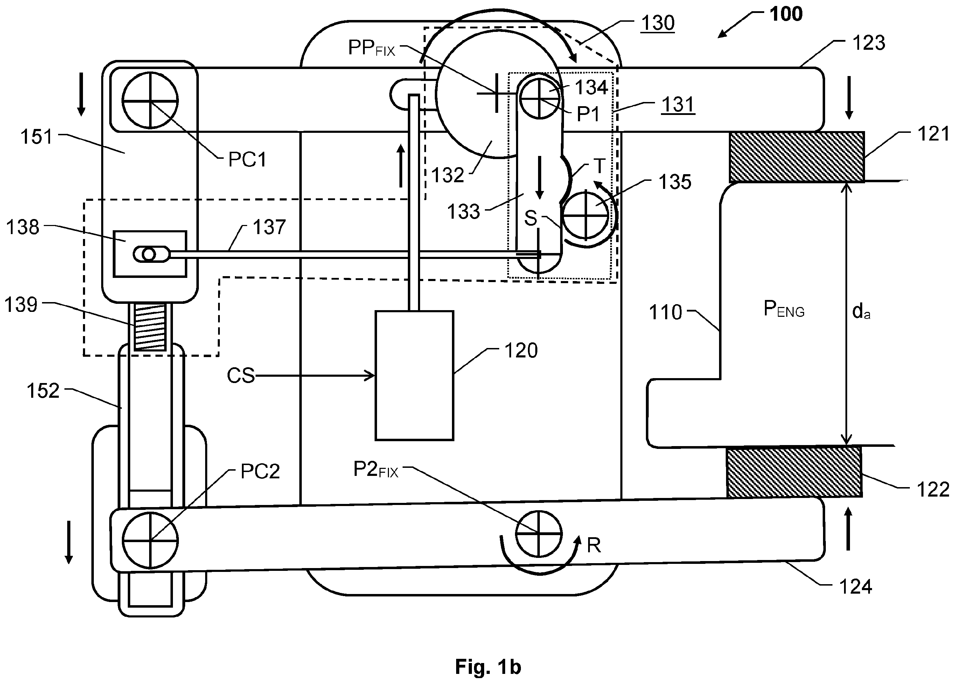

In Figures 1a and 1b, we see a schematic illustration of a brake assembly 100 for rail vehicle brake according to a first embodiment of the invention. Specifically, Figure 1a shows the brake assembly 100 when the first and second friction members 121 and 122 respectively are positioned in a disengaged position P_{DIS}.

The brake assembly 100 includes a rotating member 110, first and second friction members 121 and 122 respectively, an actuator 120 and an adjuster mechanism 130.

The rotating member 110 is mechanically linked to a wheel axle of the rail vehicle. This means that the rotating member 110 may be a brake disc, which is arranged to rotate together with the wheel axle and the wheels thereon, or the rotating member 110 may be constituted by a wheel itself, as shown in Figures 1a and 1b. In such a case, the brake disc functionality is preferably integrated into the wheel, such that the first and second friction members 121 and 122 make contact with parts of the wheel side surfaces where the integrated brake disc is arranged.

The first and second friction members 121 and 122 are movable between a respective engaged position P_{ENG} and the respective disengaged position P_{DIS}. In the engaged position P_{ENG} both the friction members 121 and 122 contact the rotating member 110, namely from opposing first and second sides respectively. In the disengaged position P_{DIS} the friction members 121 and 122 are positioned at an idle distance d_{IDL} from the rotating member 110. In the present disclosure, the idle distance d_{IDL} is defined as a joint distance between both the friction members and the rotating member 110. This means that the entire idle distance d_{IDL} may be present between one of the friction members and the rotating member 110 whereas the other friction member has a zero distance to the rotating member 110. Due to the way in which the first and second friction members 121 are 122 are attached to the brake assembly 100 this is unproblematic according to the invention.

The actuator 120 is arranged to obtain a control signal CS and in response thereto control the first and second friction members 121 and 122 to attain the respective engaged position P_{ENG}.

According to one embodiment of the invention, the actuator 120 is configured to be operated pneumatically or hydraulically. In such a case, the control signal CS may be represented by a variation in a fluid pressure level.

According to another embodiment of the invention, the actuator 120 is instead configured to be operated electromechanically in response to receiving the control signal CS on an electrical format.

In such a case, the electric control signal may cause an electric motor to operate a gear arrangement such that the first and second friction members 121 and 122 attain the respective engaged **position** P_{ENG}.

The adjuster mechanism 130 is configured to control the first and second friction members 121 and 122, such that in the disengaged position P_{DIS} the friction members 121 and 122 are positioned within a joint margin range dₘ from the idle distance d_{IDL} notwithstanding any wear of the first and second friction members 121 and 122. Analogous to the above, the joint margin range dₘ is defined such that the entire range may be accommodated on one of the sides of the rotating member 110.

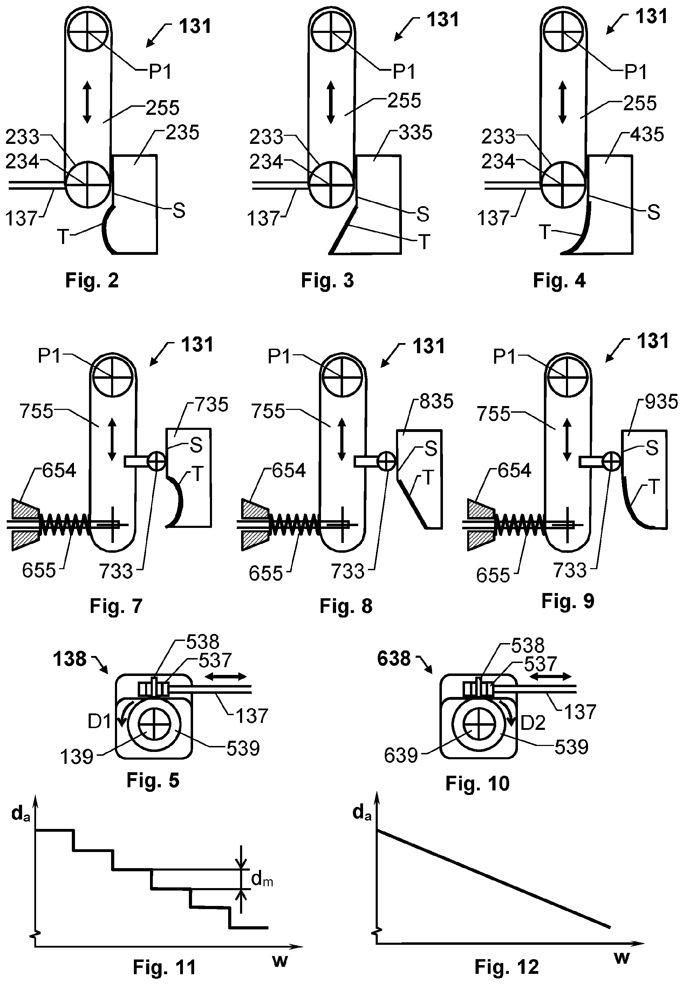

The adjuster mechanism 130 includes a probing arrangement 131 that is mechanically linked to the first and second friction members 121 and 122. The probing arrangement 131 is arranged to control the first and second friction members 121 and 122 such that an activated distance dₐ by which the friction members are separated from one another in the respective engaged position P_{ENG} decreases according to a monotonic function as the friction members are worn. Figures 11 and 12 exemplify to such monotonic functions, where the respective horizontal axis shows a wear w of the friction members 121 and 122 and the respective vertical axis indicates the activated distance dₐ.

According to the invention, the probing arrangement 131 is configured to set the activated distance dₐ by an interaction between a slidable member 133 and a fixed-position member 135 that are arranged to interact with one another along a contact profile, which comprises at least one angled segment T. According to embodiments of the invention, the contact profile preferably also includes a straight-line segment S. The fixed-position member 135 may be represented by a gear-toothed wheel as illustrated schematically in Figure 1a, and the slidable member 133 may include a set of teeth adapted to engage into the gear-toothed wheel 135.

The adjuster mechanism 130 further includes a ratcheted control screw 139 that is mechanically linked to the first and second friction members 121 and 122, for example via a respective arm 123 and 124 and at least one interconnecting member 151 and 152 as illustrated in Figure 1a. The ratcheted control screw 139 is arranged to be rotated by the interaction between the slidable member 133 and the fixed-position member 135 so as to gradually reduce the activated distance dₐ in response to the first and second friction members 121 and 122 being worn w.

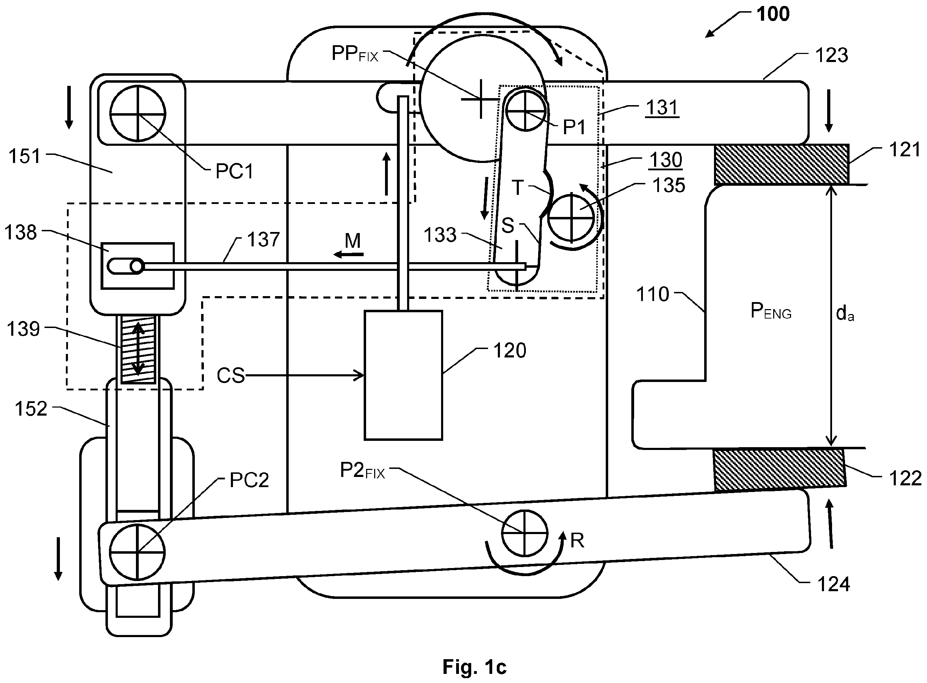

According to one embodiment of the invention, the first friction member 121 is attached to a primary end of a first arm 123 that is rotatably attached to a first joint P1 somewhere between the primary end and a secondary end of the first arm 123. The first joint P1, in turn, is eccentrically mounted on a rotatable member 132, which is rotatably attached to a primary joint PP_{FIX} that is fixedly mounted in the brake assembly 100. As will be discussed further below with reference to Figures 1b and 1c, this attachment of the first arm 123 has the effect that a rotation of the rotatable member 132 around the primary joint PP_{FIX} causes the primary and secondary ends of the first arm 123 to translate essentially parallel to one another towards the rotating member 110 when a brake force is to be applied thereto by the first friction member 121.

Analogously, the second arm 124 has primary and secondary ends, where the second friction member 122 is mounted in the primary end. The second arm 124 is rotatably attached to a second joint P2_{FIX} somewhere between the primary and secondary ends, which second joint P2_{FIX} is fixedly mounted in the brake assembly 100.

According to one embodiment of the invention, the adjuster mechanism 130 contains the rotatable member 132. Moreover, the slidable member 133 is rotatably attached to the first joint P1 such that a movement of the first arm 123 by rotation of the a rotatable member 132 around the primary joint PP_{FIX} causes the slidable member 133 to move together with the first arm 123. When moving the first friction member 121 to the engaged position P_{ENG} the slidable member 133 is pushed towards the second joint P2_{FIX} as illustrated in Figure 1b.

In Figure 1b, all reference signs and labels that also appear in Figure 1a designate the same components/units as described above with reference to Figure 1a.

According to the embodiment of the invention shown in Figures 1a and 1b, the fixed-position member 135 includes a contact element in the form of a gear-tooth wheel. The slidable member 133 here contains the at least one angled segment T of the contact profile plus a straight-line segment S of the contact profile.

Each of the straight-line segment S and the at least one angled segment T is arranged to interact with the contact element during operation of the brake assembly 100. Specifically, this means that when the first arm 123 moves towards the rotating member 110 in connection with applying a brake force and moves away from the rotating member 110 in connection with releasing the brake force, the slidable member 133 slides with its contact profile along the fixed-position member 135 in first and second directions respectively, where the second direction is opposite to the first direction.

According to one embodiment of the invention, a first connection member 151 is connected to the secondary end of the first arm 123 via a first joint PC1, a second connection member 152 is connected to the secondary end of the second arm 124 via a second joint PC2 and the first and second connection members 151 and 152 respectively are interconnected via the ratcheted control screw 139. When a brake force is applied, the above-described translational movement of the first arm 123 where its primary and secondary ends move in parallel with one another also causes the second joint PC2 and the secondary end of the second arm 124 to be pushed in a direction that is essentially parallel to the translational movement of the first arm 123. As a further result, the second arm 124 rotates around the second joint P2_{FIX}, which, in turn, pushes the second friction member towards the rotating member 110. Consequently, a brake force is applied to the rotating member 110. In this process, the first friction member 121 makes contact with the rotating member 110 somewhat before the second friction member 122 does so. In practice, however, this has no detrimental effect on the braking efficiency.

The straight-line segment S of the contact profile is arranged to interact with the contact element 135 such that the first and second friction members 121 and 122 are movable between the engaged and disengaged positions P_{ENG} and P_{DIS} respectively without causing an adjustment of the ratcheted control screw 139 if, in the disengaged position P_{DIS}, the friction members 121 and 122 are positioned within the joint margin range dₘ from the idle distance d_{IDL}.

The at least one angled segment T, which in Figures 1a and 1b is represented by a convex shape, is arranged to interact with the contact element 135 such that the activated distance dₐ is reduced to an extent that depends on how long a distance the at least one angled segment T of the contact profile slides against the fixed-position member 135.

According to one embodiment of the invention, the adjuster mechanism 130 further comprises a shaft member 137 that connects the probing arrangement 131 to the ratcheted control screw 139. The shaft member 137 is arranged to cause a rotation of the ratcheted control screw 139 in response to the interaction between the slidable member 133 and the fixed-position member 135 along the at least one angled segment T of the contact profile. Referring now to Figure 1c, more precisely, this interaction means that when the first friction member 121 is moved towards the engaged position P_{ENG} the slidable member 133 is pushed in a general direction towards the second joint P2_{FIX}.

The slidable member 133 and the fixed-position member 135 are configured such that when each of the first and second friction members 121 and 122 is positioned in the respective disengaged position P_{DIS}, the slidable member 133 and the fixed-position member 135 contact one another at a point on the straight-line segment S of the contact profile.

If, when the friction members 121 and 122 are positioned in the respective engaged positions P_{ENG}, the activated distance dₐ between them exceeds an adjustment threshold, the slidable member 133 and the fixed-position member 135 likewise contact one another at a point on the straight-line segment S of the contact profile.

However, if, when the friction members 121 and 122 are positioned in the respective engaged positions P_{ENG}, the activated distance dₐ is equal to or subceeds the adjustment threshold, the slidable member 133 and the fixed-position member 135 contact one another at a point on the angled segment T of the contact profile. This causes a translational movement M of the shaft member 137 along its symmetry axis such that the shaft member 137 pushes the ratcheted control screw 139 to be rotated in a first direction D1, for example as illustrated in Figure 5. Here, the ratcheted control screw 139 is comprised in a housing 138 in which the shaft member 137 is arranged to act on a lever 538 via an actuator 537 that has a slack to the lever 538, such that the actuator 537 only acts on the lever 538 when the translational movement M has consumed the slack. The actuator 537, in turn, is preferably arranged to rotate the ratcheted control screw 139 via a free-wheel 539 in such a way that the translational movement M of the actuator 537 in one direction results in a rotation of the ratcheted control screw 139 in the first direction D1, whereas the translational movement M of the actuator 537 in a direction opposite to said one direction exclusively results in that the free-wheel rotates around the ratcheted control screw 139.

As mentioned above, according to one embodiment of the invention, the ratcheted control screw 139 is arranged between the first and second pivot joints PC1 and PC2 via the first connection member 151 to the first pivot joint PC1 and the second connection member 152 to the second pivot joint PC2. Here, the ratcheted control screw 139 is arranged such that a rotation thereof causes the screw 139 to expand and thus separate the first and second pivot joints PC1 and PC2 from one another. This further causes the second arm 124 to rotate R around the second joint P2_{FIX} and the first and second friction members 121 and 122 to approach one another, and consequently apply a brake force to the rotating member 110 as described above. The ratcheted control screw 139 here not only accomplishes compensation for the wear of the friction members 121 and 122, the ratcheted control screw 139 also ensures that a desired brake force may be applied to the rotating member 110.

Referring now to Figure 2, according to one embodiment of the invention, a slidable member 233 is mounted on an elongated member 255 that is connected to the first joint P1.

In this embodiment, the slidable member 233 also contains the contact element and the fixed-position member 235 includes the at least one angled segment T of the contact profile plus a straight-line segment S of the contact profile. Hence, the roles described above with reference to Figures 1a to 1c are basically reversed in Figure 2. In Figure 2, however, each of the straight-line segment S and the at least one angled segment T is arranged to interact with the contact element and the straight-line segment S is arranged such that the friction members 121 and 122 are movable between the engaged and disengaged positions P_{ENG} and P_{DIS} respectively without causing an adjustment of the ratcheted control screw 139, if, in the respective disengaged position P_{DIS}, the friction members 121 and 122 are positioned within the joint margin range dₘ from the idle distance d_{IDL}. Further, the at least one angled segment T is arranged to interact with the contact element such that the activated distance dₐ is reduced to an extent that depends on how long a distance the contact element slides against the at least one angled segment T, which shows a general convex surface towards the slidable member 233.

Analogous the previously described embodiments of the invention the ratcheted control screw 139 is mechanically linked to the friction members 121 and 122, and the ratcheted control screw 139 is arranged to be rotated by the interaction between the slidable member 233 and the fixed-position member 235 so as to gradually reduce the activated distance dₐ in response to the friction members 121 and 122 being worn w.

Figure 3 shows one embodiment of the invention that is similar to that of Figure 2, however in Figure 3, a fixed-position member 335 includes the at least one angled segment T of the contact profile plus a straight-line segment S of the contact profile, where the at least one angled segment T shows a surface towards the slidable member 233 that is straight and directed towards the symmetry axis of the shaft member 137 in such a way that the longer the slidable member 233 slides along the fixed-position member 335 over the angled segment T the further the shaft member 137 is caused to move M away from the fixed-position member along its symmetry axis thus causing the ratcheted control screw 139 to rotate around its axis in a first direction D1.

Figure 4 shows yet another embodiment of the invention that is similar to that of Figures 2 and 3, however in Figure 4, a fixed-position member 435 includes the at least one angled segment T of the contact profile plus a straight-line segment S of the contact profile, where the at least one angled segment T shows a surface towards the slidable member 233 that is concave and directed towards the symmetry axis of the shaft member 137 in such a way that the longer the slidable member 233 slides along the fixed-position member 435 over the angled segment T the further the shaft member 137 is caused to move M away from the fixed-position member along its symmetry axis thus causing the ratcheted control screw 139 to rotate around its axis in a first direction D1.

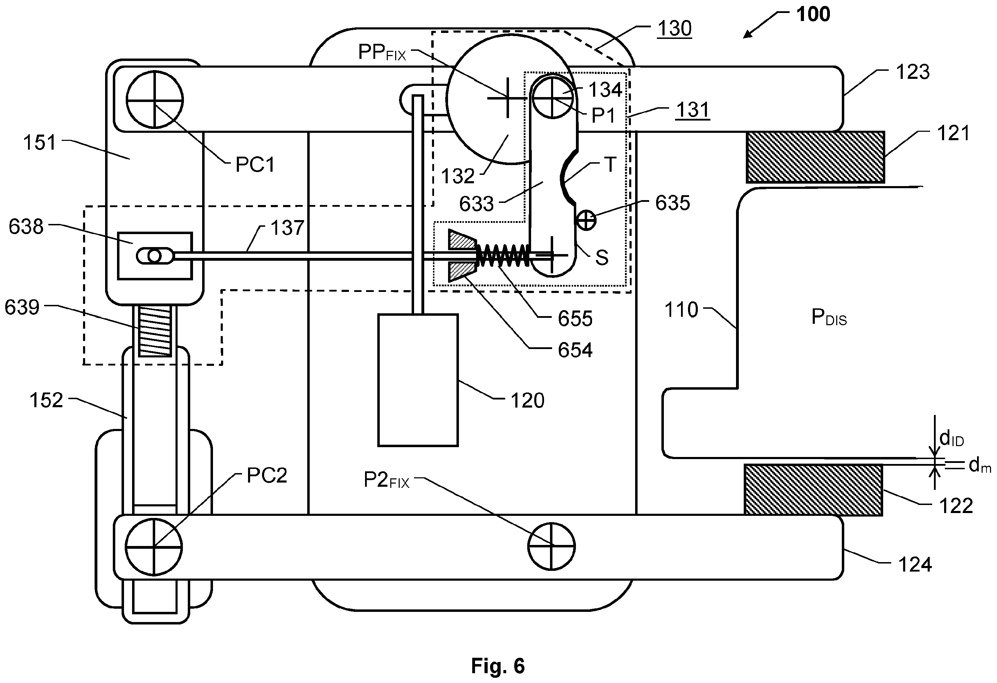

Figure 6 schematically illustrates a brake assembly 100 for a rail vehicle brake according to a second embodiment of the invention. In Figure 6, all reference signs and labels that also appear in Figures 1a to 1c designate the same components/units as described above with reference to Figures 1a to 1c.

The main difference between the embodiment of Figure 1 and the one illustrated in Figure 6 is that in the latter the angled segment T has a concave shape directed towards the symmetry axis of the shaft member 137 in such a way that the longer a slidable member 633 slides along a fixed-position member 635 over the angled segment T the further the shaft member 137 is caused to move M *towards* the fixed-position member along its symmetry axis - in stead of away from the same - and thus causes the ratcheted control screw 139 to rotate around its axis in a second direction D2, which, depending on the design of the ratcheted control screw 139, may or may not be opposite to the first direction D1.

To ensure that the slidable member 633 remains in contact with the fixed-position member 635 throughout the entire braking procedure, a compressible member 655 is preferably arranged to push the slidable member 633 towards the fixed-position member 635 while allowing the slidable member 633 to slide along the fixed-position member 635. The compressible member may be represented by a compression spring mounted between a fixed piece 654 in the brake assembly 100 and the slidable member 633, for example as illustrated in Figure 6.

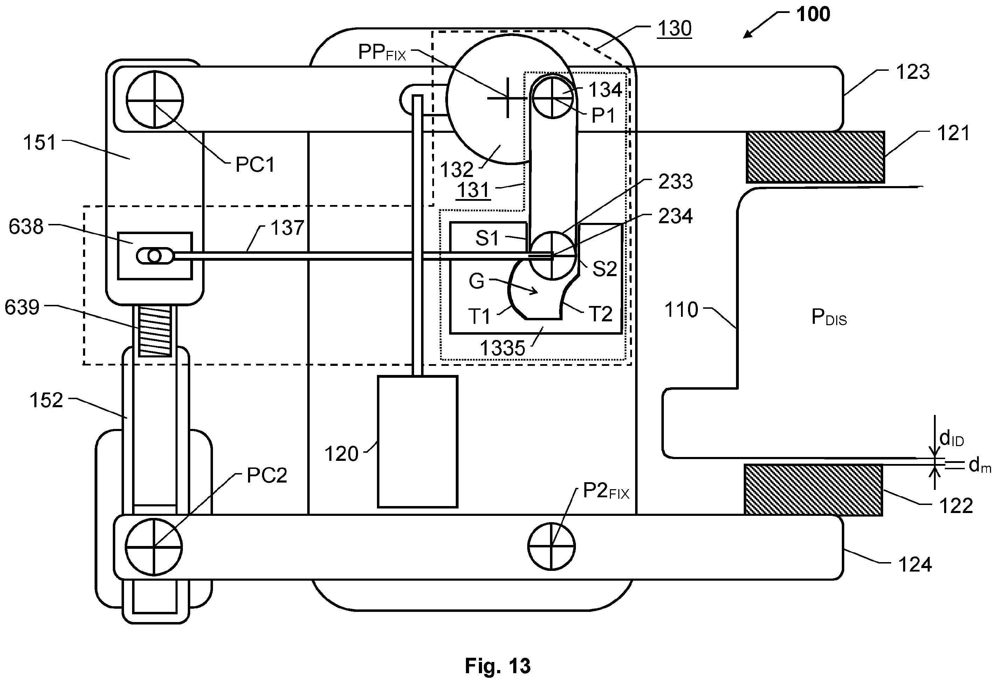

Figure 13 shows one embodiment of the invention that represents an alternative to the embodiment discussed above with reference to Figures 6 to 9. In Figure 13, all reference signs and labels that also appear in Figures 6 to 9 designate the same components/ units as described above with reference to Figures 6 to 9.

Here, the fixed-position member 1335 contains a guide track G that is configured to lead the slidable member 233 in the fixed-position member 1335 throughout a braking procedure wherein the first and second friction members 121 and 122 are moved between the respective engaged and disengaged positions P_{ENG} and P_{DIS}. The guide track G, in turn, has first and second straight-line segments S1 and S2 respectively and first and second angled segments T1 and T2 respectively, which are arranged to lead the slidable member 233 such that the slidable member 233 is in contact with at least one of the segments S1, S2, T1 and/or T2 at each point in time during the braking procedure. For example, the guide track G may be designed as shown in Figure 13, i.e., where the first straight-line segments S1 and the first angled segment T1 are arranged on a first side of the slidable member 233, the second straight-line segments S2 and the second angled segment T2 are arranged on a second side of the slidable member 233, and the first and second angled segments T1 and T2 are angled in such a way that the longer the slidable member 233 slides along the guide track G the further the shaft member 137 is caused to move in a consistent direction in relation to the fixed-position member 1335, e.g., leftwards Figure 13. It should be noted that the shaft member 137 may equally well be caused to move in any other consistent direction different from an orientation of the straight-line segments S1 and S2, such as rightwards.

Figure 10 shows a housing 638 that contains the ratcheted control screw 639, which housing 638 is configured to receive the shaft member 137 such that the shaft member 137 may act on the lever 538 via the actuator 537 via a slack to the lever 538, such that the actuator 537 only acts on the lever 538 when the translational movement M has consumed the slack. The actuator 537, in turn, is preferably arranged to rotate the ratcheted control screw 639 via a free-wheel 539 in such a way that the translational movement M of the actuator 537 in one direction results in a rotation of the ratcheted control screw 639 in the second direction D2, whereas the translational movement M of the actuator 537 in a direction opposite to said one direction exclusively results in a rotation of the free-wheel around the ratcheted control screw 639.

Figures 7 to 9 show different embodiments of the proposed probing mechanism 131 wherein different types of fixed-position members contain at least one angled segment T of the contact profile, and a slidable member is arranged to interact with the contact profile to cause the shaft member 137 to act on the ratcheted control screw 639 in a direction being opposite to the movement M illustrated in Figure 1c.

Figure 7 shows one embodiment of the invention, where, analogous to Figure 6, the angled segment T has a concave shape. In Figure 7, however, the contact profile is included in a fixed-position member 735 and a slidable member 733 is mounted on an elongated member 755 that is connected to the first joint P1. The concave shape of the angled segment T is directed towards the symmetry axis of the shaft member 137 in such a way that the longer the slidable member 733 slides along the fixed-position member 735 over the angled segment T the further the shaft member 137 is caused to move towards the fixed-position member 735 along its symmetry axis thus causing the ratcheted control screw 639 to rotate around its axis in the second direction D2.

Figure 8 shows one embodiment of the invention, where the angled segment T has a straight shape and a slidable member 833 is mounted on an elongated member 855 that is connected to the first joint P1. The straight shape of the angled segment T is directed towards the symmetry axis of the shaft member 137 in such a way that the longer the slidable member 833 slides along the fixed-position member 835 over the angled segment T the further the shaft member 137 is caused to move towards the fixed-position member 835 along its symmetry axis thus causing the ratcheted control screw 639 to rotate around its axis in the second direction D2.

Figure 9 shows one embodiment of the invention, where the angled segment T has a convex shape and a slidable member 933 is mounted on an elongated member 955 that is connected to the first joint P1. The convex shape of the angled segment T is directed towards the symmetry axis of the shaft member 137 in such a way that the longer the slidable member 933 slides along the fixed-position member 935 over the angled segment T the further the shaft member 137 is caused to move towards the fixed-position member 935 along its symmetry axis thus causing the ratcheted control screw 639 to rotate around its axis in the second direction D2.

Analogous to the above, according to embodiments of the invention, the at least one angled segment T may contain a set of teeth and the contact element may include a rotatable gear-toothed member, e.g., 233 or 733, which is arranged to engage into the set of teeth of the at least one angled segment T so as to in response to said engagement cause the adjustment of the ratcheted control screw 139 or 639 respectively.

In Figures 1a - 1c, 2 - 4 and 6 - 9, the specific distance that the shaft member 137 is caused to move M when the slidable member 233 slides along the fixed-position member 435 over the angled segment T depends on the specific dimensions of the components involved, inter alia the dimensions of the slidable members 133, 233, the elongated member 255, and the fixed-position members 135, 235, 335, 435, 735, 835 and 935 respectively. Hence, a desired gear ratio may be attained by choosing said dimensions.

Figure 11 shows a diagram that exemplifies how the activated distance dₐ between the friction members 121 and 122 may be adjusted for wear w of the friction members according to a stepwise procedure. The diagram shows the wear w along the horizontal axis and indicates activated distance dₐ along the vertical axis.

Preferably, the ratcheted control screw 139 and 639 respectively is configured to reduce the activated distance dₐ between the friction members 121 and 122 according to a stepwise procedure, where two consecutive steps in the stepwise procedure are separated from one another by an increment equivalent to less than or equal to the joint margin range dₘ. Namely, thereby it can be guaranteed that the idle distance D_{IDL} remains within joint margin range dₘ.

Figure 12 shows a diagram illustrating how the activated distance dₐ between the friction members 121 and 122 may be adjusted for wear w according to a continuous procedure. The diagram shows the wear w along the horizontal axis and indicates activated distance dₐ along the vertical axis. A continuous adjustment procedure may be attained if the ratcheted control screw 139 and 639 respectively is configured to reduce the activated distance dₐ between the friction members 121 and 122 continuously.

## Claims

1. A brake assembly (100) for a rail vehicle, which brake assembly (100) comprises:
a rotating member (110) mechanically linked to a wheel axle of the rail vehicle,
first and second friction members (121; 122) movable between a respective engaged position (P_{ENG}) in which the first and second friction members (121; 122) contact the rotating member (110) from opposing first and second sides respectively, and a respective disengaged position (P_{DIS}) in which the first and second friction members (121; 122) are positioned at an idle distance (d_{IDL}) from the rotating member (110),
an actuator (120) arranged to obtain a control signal (CS) and in response thereto control the first and second friction members (121; 122) to attain the respective engaged position (P_{ENG}), and
an adjuster mechanism (130) configured to control the first and second friction members (121; 122) such that in the disengaged position (P_{DIS}) the first and second friction members (121; 122) are positioned within a joint margin range (dₘ) from the idle distance (d_{IDL}) notwithstanding any wear (w) of the first and second friction members (121; 122), **characterized in that** the adjuster mechanism (130) comprises:
a probing arrangement (131) mechanically linked to the first and second friction members (121; 122), which probing arrangement (131) is arranged to control the first and second friction members (121; 122) such that an activated distance (dₐ) by which the first and second friction members (121; 122) are separated from one another in the respective engaged position (P_{ENG}) decreases according to a monotonic function as the first and second friction members (121; 122) are worn (w), and which probing arrangement (131) is configured to set the activated distance (dₐ) by an interaction between a slidable member (133, 233, 633, 733) and a fixed-position member (135, 235, 335, 435, 635, 735, 835, 935, 1335) arranged to interact with one another along a contact profile that comprises at least one angled segment (T, T1, T2), and
a ratcheted control screw (139, 639) that is mechanically linked to the first and second friction members (121; 122), which ratcheted control screw (139) is arranged to be rotated by the interaction between the slidable member (133) and the fixed-position member (135, 235, 335, 435, 635, 735, 835, 935, 1335) so as to gradually reduce the activated distance (dₐ) in response to the first and second friction members (121; 122) being worn (w).

2. The brake assembly (100) according to claim 1, wherein:
the first friction member (121) is attached to a first arm (123) that is rotatably attached to a first joint (P1) which, in turn, is eccentrically mounted on a rotatable member (132) rotatably attached to a primary joint (PP_{FIX}) that is fixedly mounted in the brake assembly (100), and
the second arm (124) is rotatably attached to a second joint (P2_{FIX}) that is fixedly mounted in the brake assembly (100).

3. The brake assembly (100) according to claim 2, wherein:
the adjuster mechanism (130) comprises the rotatable member (132), and
the slidable member (133, 233, 633, 733) is rotatably attached to the first joint (P1) such that a movement of the first arm (123) by rotation of the a rotatable member (132) around the primary joint (PP_{FIX}) causes the slidable member (133, 233, 633, 733) to move together with the first arm (123).

4. The brake assembly (100) according to any one of claims 2 or 3, wherein:
the fixed-position member (135) comprises a contact element, and
the slidable member (133, 633) comprises the at least one angled segment (T, T1, T2) of the contact profile plus a straight-line segment (S, S1, S2) of the contact profile, wherein each of the straight-line segment (S, S1, S2) and the at least one angled segment (T, T1, T2) is arranged to interact with the contact element during operation of the brake assembly (100), the straight-line segment (S, S1, S2) being arranged to interact with the contact element such that the first and second friction members (121; 122) are movable between the respective engaged and disengaged positions (P_{ENG}; P_{DIS}) without causing an adjustment of the ratcheted control screw (139, 639), if, in the respective disengaged position (P_{DIS}), the first and second friction members (121; 122) are positioned within the joint margin range (dₘ) from the idle distance (d_{IDL}), and the at least one angled segment (T, T1, T2) is arranged to interact with the contact element such that the activated distance (dₐ) is reduced to an extent that depends on how long a distance the at least one angled segment (T, T1, T2) of the contact profile slides against the fixed-position member (135).

5. The brake assembly (100) according to any one of claims 2 or 3, wherein:
the slidable member (233, 733) comprises a contact element, and
the fixed-position member (235, 335, 435, 635, 735, 835, 935, 1335) comprises the at least one angled segment (T, T1, T2) of the contact profile plus a straight-line segment (S, S1, S2) of the contact profile, wherein each of the straight-line segment (S, S1, S2) and the at least one angled segment (T, T1, T2) is arranged to interact with the contact element, and the straight-line segment (S, S1, S2) is arranged such that the first and second friction members (121; 122) are movable between the respective engaged and disengaged positions (P_{ENG}; P_{DIS}) without causing an adjustment of the ratcheted control screw (139, 639), if, in the respective disengaged position (P_{DIS}), the first and second friction members (121; 122) are positioned within the joint margin range (dₘ) from the idle distance (d_{IDL}), and the at least one angled segment (T, T1, T2) is arranged to interact with the contact element such that the activated distance (dₐ) is reduced to an extent that depends on how long a distance the contact element slides against the at least one angled segment (T, T1, T2).

6. The brake assembly (100) according to any one of claims 4 or 5, wherein the at least one angled segment (T) comprises a set of teeth and the contact element comprises a rotatable gear-toothed member (233, 733) arranged to engage into the set of teeth of the at least one angled segment (T) so as to in response to said engagement cause the adjustment of the ratcheted control screw (139, 639).

7. The brake assembly (100) according to any one of claims 2 to 6, wherein the adjuster mechanism (130) further comprises a shaft member (137) connecting the probing arrangement (131) to the ratcheted control screw (139, 639), which shaft member (137) is arranged to cause a rotation of the ratcheted control screw (139, 639) in response to the interaction between the slidable member (133, 233, 633, 733) and the fixed-position member (135, 235, 335, 435, 635, 735, 835, 935, 1335) along the at least one angled segment (T) of the contact profile.

8. The brake assembly (100) according to claim 7, wherein the slidable member (133, 233, 633, 733) and the fixed-position member (135, 235, 335, 435, 635, 735, 835, 935) are configured such that:
when each of the first and second friction members (121; 122) is positioned in the respective disengaged position (P_{DIS}), the slidable member (133, 233, 633, 733) and the fixed-position member (135, 235, 335, 435, 635, 735, 835, 935, 1335) contact one another at a point on the straight-line segment (S, S1, S2) of the contact profile;
if, when the first and second friction members (121; 122) are positioned in the respective engaged positions (P_{ENG}), the activated distance (dₐ) exceeds an adjustment threshold, the slidable member (133, 233, 633, 733) and the fixed-position member (135, 235, 335, 435, 635, 735, 835, 935, 1335) contact one another at a point on the straight-line segment (S, S1, S2) of the contact profile; and
if, when the first and second friction members (121; 122) are positioned in the respective engaged positions (P_{ENG}), the activated distance (dₐ) is equal to or subceeds the adjustment threshold, the slidable member (133, 233, 633, 733) and the fixed-position member (135, 235, 335, 435, 635, 735, 835, 935, 1335) contact one another at a point on the angled segment (T, T1, T2) of the contact profile, thus causing a translational movement (M) of the shaft member (137) along its symmetry axis such that the ratcheted control screw (139, 639) is rotated.

9. The brake assembly (100) according to claim 8, wherein the ratcheted control screw (139, 639) is arranged between first and second pivot joints (PC1; PC2), which first pivot joint (PC1) is rotatably attached to the first arm (123) and which second pivot joint (PC2) is rotatably attached to the second arm (124), and the ratcheted control screw (139, 639) is arranged such that rotation thereof causes:
the first and second pivot joints (PC1; PC2) to be separated from one another,
the second arm (124) to rotate (R) around the second joint (P2_{FIX}) and
the first and second friction members (121; 122) to approach one another.

10. The brake assembly (100) according to claim 9, wherein the angled segment (T) has a convex, straight or concave shape directed towards the symmetry axis of the shaft member (137) in such a way that the longer the slidable member (133, 233) slides along the fixed-position member (135, 235, 335, 435) over the angled segment (T) the further the shaft member (137) is caused to move (M) away from the fixed-position member along its symmetry axis thus causing the ratcheted control screw (139) to rotate around its axis in a first direction (D1).

11. The brake assembly (100) according to claim 9, wherein the angled segment (T, T1, T2) has a concave, straight or convex shape directed towards the symmetry axis of the shaft member (137) in such a way that the longer the slidable member (633, 733) slides along the fixed-position member (635, 735, 835, 935, 1335) over the angled segment (T, T1, T2) the further the shaft member (137) is caused to move (M) towards the fixed-position member along its symmetry axis thus causing the ratcheted control screw (139) to rotate around its axis in a second direction (D2).

12. The brake assembly (100) according to claim 11, comprising a compressible member arranged to push the slidable member (633, 733) towards the fixed-position member (635, 735, 835, 935) while allowing the slidable member (633, 733) to slide along the fixed-position member (635, 735, 835, 935).

13. The brake assembly (100) according to claim 11, wherein the fixed-position member (1335) comprises a guide track (G) configured to lead the slidable member (233) in the fixed-position member (1335) throughout a braking procedure wherein the first and second friction members (121; 122) are moved between the respective engaged and disengaged positions (P_{ENG}; P_{DIS}), which guide track (G) comprises first and second straight-line segments (S1; S2) and first and second angled segments (T1; T2) that are arranged to lead the slidable member (233) such that the slidable member (233) is in contact with at least one of said segments (S1, S2, T1, T2) at each point in time during the braking procedure.

14. The brake assembly (100) according to any one of the preceding claims, wherein the ratcheted control screw (139, 639) is configured to reduce the activated distance (dₐ) between the first and second friction members (121; 122) continuously.

15. The brake assembly (100) according to any one of the preceding claims, wherein the ratcheted control screw (139, 639) is configured to reduce the activated distance (dₐ) between the first and second friction members (121; 122) according to a stepwise procedure.

16. The brake assembly (100) according to claim 15, wherein two consecutive steps in the stepwise procedure are separated from one another by an increment equivalent to less than or equal to the joint margin range (dₘ).

17. The brake assembly (100) according to any one of the preceding claims, wherein the actuator (120) is configured to be operated pneumatically or hydraulically in response to receiving the control signal (CS) as a variation in a fluid pressure level.

18. The brake assembly (100) according to any one of claims 1 to 16, wherein the actuator (120) is configured to be operated electromechanically in response to receiving the control signal (CS) on an electrical format.

## Patentansprüche

1. Bremsanordnung (100) für ein Schienenfahrzeug, wobei die Bremsanordnung (100) aufweist:
ein Drehelement (110), das mechanisch mit einer Radachse des Schienenfahrzeugs verbunden ist;
ein erstes und ein zweites Reibungselement (121; 122), die zwischen einer jeweiligen Eingriffsposition (P_{ENG}), in der das erste und das zweite Reibungselement (121; 122) mit dem Drehelement (110) jeweils von einer ersten und einer zweiten Seite, die einander gegenüberliegen, in Kontakt stehen, und einer jeweiligen Nichteingriffsposition (P_{DIS}) bewegbar sind, in der das erste und das zweite Reibungselement (121; 122) in einem Leerlaufabstand (d_{IDL}) vom Drehelement (110) angeordnet sind;
einen Aktuator (120), der dazu eingerichtet ist, ein Steuersignal (CS) zu empfangen und in Antwort darauf das erste und das zweite Reibungselement (121; 122) derart zu steuern, dass sie die jeweilige Eingriffsposition (P_{ENG}) erreichen; und
einen Einstellmechanismus (130), der dafür konfiguriert ist, das erste und das zweite Reibungselement (121; 122) derart zu steuern, dass in der Nichteingriffsposition (P_{DIS}) das erste und das zweite Reibungselement (121, 122) ungeachtet eines etwaigen Verschleißes (w) des ersten und des zweiten Reibungselements (121; 122) innerhalb eines gemeinsamen Toleranzbereichs (dₘ) bezogen auf den Leerlaufabstand (d_{IDL}) angeordnet sind,
**dadurch gekennzeichnet, dass**
der Einstellmechanismus (130) aufweist:
eine Abtastanordnung (131), die mechanisch mit dem ersten und dem zweiten Reibungselement (121; 122) verbunden ist, wobei die Abtastanordnung (131) dazu eingerichtet ist, das erste und das zweite Reibungselement (121; 122) derart zu steuern, dass ein Aktivierungsabstand (dₐ), um den das erste und das zweite Reibungselement (121; 122) in der jeweiligen Eingriffsposition (P_{ENG}) voneinander beabstandet sind, entsprechend einer monotonen Funktion abnimmt, wenn das erste und das zweite Reibungselement (121; 122) verschleißen (w), und wobei die Abtastanordnung (131) dafür konfiguriert ist, den Aktivierungsabstand (dₐ) durch ein Zusammenwirken zwischen einem Gleitelement (133, 233, 633, 733) und einem feststehenden Element (135, 235, 335, 435, 635, 735, 835, 935, 1335) einzustellen, die derart angeordnet sind, dass sie entlang eines Kontaktprofils, das mindestens ein abgewinkeltes Segment (T, T1, T2) aufweist, zusammenwirken; und
eine mit dem ersten und dem zweiten Reibungselement (121; 122) mechanisch verbundene Ratschen-Stellschraube, wobei die Ratschen-Stellschraube (139) dazu eingerichtet ist, durch das Zusammenwirken zwischen dem Gleitelement (133) und dem feststehenden Element (135, 235, 335, 435, 635, 735, 835, 935, 1335) gedreht zu werden, um den Aktivierungsabstand (dₐ) in Antwort auf den Verschleiß (w) des ersten und des zweiten Reibungselements (121; 122) graduell zu vermindern.

2. Bremsanordnung (100) nach Anspruch 1, wobei:
das erste Reibungselement (121) an einem ersten Arm (123) befestigt ist, der drehbar an einem ersten Gelenk (P1) befestigt ist, welches wiederum exzentrisch auf einem drehbaren Element (132) montiert ist, das drehbar an einem Hauptgelenk (PP_{FIX}) befestigt ist, welches fest in der Bremsanordnung (100) montiert ist, und
der zweite Arm (124) drehbar an einem zweiten Gelenk (P2_{FIX}) befestigt ist, das fest in der Bremsanordnung (100) montiert ist.

3. Bremsanordnung (100) nach Anspruch 2, wobei:
der Einstellmechanismus (130) das Drehelement (132) aufweist, und
das Gleitelement (133, 233, 633, 733) drehbar am ersten Gelenk (P1) befestigt ist, so dass eine Bewegung des ersten Arms (123) durch eine Drehbewegung des Drehelements (132) um das Hauptgelenk (PP_{FIX}) bewirkt, dass sich das Gleitelement (133, 233, 633, 733) zusammen mit dem ersten Arm (123) bewegt.

4. Bremsanordnung (100) nach Anspruch 2 oder 3, wobei
das feststehende Element (135) ein Kontaktelement aufweist, und
das Gleitelement (133, 633) das mindestens eine abgewinkelte Segment (T, T1, T2) des Kontaktprofils sowie ein geradliniges Segment (S, S1, S2) des Kontaktprofils aufweist, wobei jedes unter dem geradlinigen Segment (S, S1, S2) und dem mindestens einen abgewinkelten Segment (T, T1, T2) dazu eingerichtet ist, während des Betriebs der Bremsanordnung (100) mit dem Kontaktelement zusammenzuwirken, wobei das geradlinige Segment (S, S1, S2) dazu eingerichtet ist, mit dem Kontaktelement derart zusammenzuwirken, dass das erste und das zweite Reibungselement (121, 122) zwischen der jeweiligen Eingriffs- und der jeweiligen Nichteingriffsposition (P_{ENG}; P_{DIS}) bewegbar sind, ohne eine Verstellung der Ratschen-Stellschraube (139, 639) zu bewirken, sofern in der jeweiligen Nichteingriffsposition (P_{DIS}) das erste und das zweite Reibungselement (121, 122) innerhalb des gemeinsamen Toleranzbereichs (dₘ) vom Leerlaufabstand (d_{IDL}) angeordnet sind und das mindestens eine abgewinkelte Segment (T, T1, T2) dazu eingerichtet ist, mit dem Kontaktelement zusammenzuwirken, so dass der Aktivierungsabstand (dₐ) in einem Maß vermindert wird, das davon abhängt, über welche Strecke das mindestens eine abgewinkelte Segment (T, T1, T2) des Kontaktprofils gegen das feststehende Element (135) gleitet.

5. Bremsanordnung (100) nach Anspruch 2 oder 3, wobei:
das Gleitelement (233, 733) ein Kontaktelement aufweist, und
das feststehende Element (235, 335, 435, 635, 735, 835, 935, 1335) das mindestens eine abgewinkelte Segment (T, T1, T2) des Kontaktprofils sowie ein geradliniges Segment (S, S1, S2) des Kontaktprofils aufweist, wobei sowohl das geradlinige Segment (S, S1, S2) als auch das mindestens eine abgewinkelte Segment (T, T1, T2) dazu eingerichtet sind, mit dem Kontaktelement zusammenzuwirken, und das geradlinige Segment (S, S1, S2) derart angeordnet ist, dass das erste und das zweite Reibungselement (121; 122) zwischen der jeweiligen Eingriffs- und Nichteingriffsposition (P_{ENG}; P_{DIS}) bewegbar sind, ohne eine Verstellung der Ratschen-Stellschraube (139, 639) zu bewirken, sofern in der jeweiligen Nichteingriffsposition (P_{DIS}) das erste und das zweite Reibungselement (121; 122) innerhalb des gemeinsamen Toleranzbereichs (dₘ) vom Leerlaufabstand (d_{IDL}) angeordnet sind, und das mindestens eine abgewinkelte Segment (T, T1, T2) dazu eingerichtet ist, mit dem Kontaktelement zusammenzuwirken, so dass der Aktivierungsabstand (dₐ) in einem Maß vermindert wird, das davon abhängt, über welche Strecke das Kontaktelement gegen das mindestens eine abgewinkelte Segment (T, T1, T2) gleitet.

6. Bremsanordnung (100) nach Anspruch 4 oder 5, wobei das mindestens eine abgewinkelte Segment (T) einen Satz von Zähnen aufweist und das Kontaktelement ein drehbares Zahnradelement (233, 733) aufweist, das dazu eingerichtet ist, mit dem Satz von Zähnen des mindestens einen abgewinkelten Segments (T) in Eingriff zu stehen, um in Antwort auf diesen Eingriff das Verstellen der Ratschen-Stellschraube (139, 639) zu bewirken.

7. Bremsanordnung (100) nach einem der Ansprüche 2 bis 6, wobei der Einstellmechanismus (130) ferner ein Schaftelement (137) aufweist, das die Abtastanordnung (131) mit der Ratschen-Stellschraube (139, 639) verbindet, wobei das Schaftelement (137) dazu eingerichtet ist, in Antwort auf das Zusammenwirken zwischen dem Gleitelement (133, 233, 633, 733) und dem feststehenden Element (135, 235, 335, 435, 635, 735, 835, 935, 1335) entlang des mindestens einen abgewinkelten Abschnitts (T) des Kontaktprofils eine Drehbewegung der Ratschen-Stellschraube (139, 639) zu bewirken.

8. Bremsanordnung (100) nach Anspruch 7, wobei das Gleitelement (133, 233, 633, 733) und das feststehende Element (135, 235, 335, 435, 635, 735, 835, 935) derart konfiguriert sind, dass:
wenn sich sowohl das erste als auch das zweite Reibungselement (121, 122) in der jeweiligen Nichteingriffsposition (P_{DIS}) befinden, das Gleitelement (133, 233, 633, 733) und das feststehende Element (135, 235, 335, 435, 635, 735, 835, 935, 1335) an einem Punkt auf dem geradlinigen Segment (S, S1, S2) des Kontaktprofils miteinander in Kontakt stehen,
falls, wenn das erste und das zweite Reibungselement (121; 122) sich in den jeweiligen Eingriffspositionen (P_{ENG}) befinden, der Aktivierungsabstand (dₐ) einen Einstellschwellenwert überschreitet, das Gleitelement (133, 233, 633, 733) und das feststehende Element (135, 235, 335, 435, 635, 735, 835, 935, 1335) an einem Punkt auf dem geradlinigen Segment (S, S1, S2) des Kontaktprofils miteinander in Kontakt kommen; und
falls, wenn das erste und das zweite Reibungselement (121; 122) sich in den jeweiligen Eingriffspositionen (P_{ENG}) befinden, der Aktivierungsabstand (dₐ) gleich oder größer als der Einstellschwellenwert ist, das Gleitelement (133, 233, 633, 733) und das feststehende Element (135, 235, 335, 435, 635, 735, 835, 935, 1335) an einem Punkt auf dem abgewinkelten Segment (T, T1, T2) des Kontaktprofils miteinander in Kontakt kommen, wodurch eine Translationsbewegung (M) des Schaftelements (137) entlang seiner Symmetrieachse bewirkt wird, so dass die Ratschen-Stellschraube (139, 639) gedreht wird.

9. Bremsanordnung (100) nach Anspruch 8, wobei die Ratschen-Stellschraube (139, 639) zwischen einem ersten und einem zweiten Schwenkgelenk (PC1; PC2) angeordnet ist, wobei das erste Schwenkgelenk (PC1) drehbar am ersten Arm (123) und das zweite Schwenkgelenk (PC2) drehbar am zweiten Arm (124) befestigt ist, und wobei die Ratschen-Stellschraube (139, 639) derart eingerichtet ist, dass ihre Drehbewegung bewirkt, dass:
das erste und das zweite Schwenkgelenk (PC1; PC2) voneinander getrennt werden;
sich der zweite Arm (124) um das zweite Gelenk dreht (R); und
sich das erste und das zweite Reibungselement (121; 122) einander annähern.

10. Bremsanordnung (100) nach Anspruch 9, wobei das abgewinkelte Segment (T) eine konvexe, gerade oder konkave Form aufweist, die zur Symmetrieachse des Schaftelements (137) hin gerichtet ist, derart, dass veranlasst wird, dass, je weiter das Gleitelement (133, 233) entlang des feststehenden Elements (135, 235, 335, 435) über das abgewinkelte Segment (T) gleitet, desto weiter das Schaftelement (137) sich entlang seiner Symmetrieachse vom feststehenden Element wegbewegt (M), wodurch veranlasst wird, dass die Ratschen-Stellschraube (139) sich in eine erste Richtung (D1) um ihre Achse dreht.

11. Bremsanordnung (100) nach Anspruch 9, wobei das abgewinkelte Segment (T, T1, T2) eine konkave, gerade oder konvexe Form aufweist, die zur Symmetrieachse des Schaftelements (137) hin gerichtet ist, derart, dass veranlasst wird, dass je weiter das Gleitelement (633, 733) entlang des feststehenden Elements (635, 735, 835, 935, 1335) über das abgewinkelte Segment (T, T1, T2) gleitet, desto weiter das Schaftelement (137) entlang seiner Symmetrieachse in Richtung zum feststehenden Element bewegt wird (M), wodurch veranlasst wird, dass die Ratschen-Stellschraube (139) sich in eine zweite Richtung (D2) um ihre Achse dreht.

12. Bremsanordnung (100) nach Anspruch 11, aufweisend:
ein komprimierbares Element, das dazu eingerichtet ist, das Gleitelement (633, 733) in Richtung zum feststehenden Element (635, 735, 835, 935) zu drücken, während es dem Gleitelement (633, 733) ermöglicht, entlang des feststehenden Elements (635, 735, 835, 935) zu gleiten.

13. Bremsanordnung (100) nach Anspruch 11, wobei das feststehende Element (1335) eine Führungsschiene (G) aufweist, die dafür konfiguriert ist, das Gleitelement (233) während eines gesamten Bremsvorgangs im feststehenden Element (1335) zu führen, wobei das erste und das zweite Reibungselement (121; 122) zwischen den jeweiligen Eingriffs- und Nichteingriffspositionen (P_{ENG}; P_{DIS}) bewegt werden, wobei die Führungsschiene (G) ein erstes und ein zweites geradliniges Segment (S1; S2) sowie ein erstes und ein zweites abgewinkeltes Segment (T1; T2) aufweist, die dazu eingerichtet sind, das Gleitelement (233) derart zu führen, dass das Gleitelement (233) zu jedem Zeitpunkt während des Bremsvorgangs mit mindestens einem der Segmente (S1, S2, T1, T2) in Kontakt steht.

14. Bremsanordnung (100) nach einem der vorangehenden Ansprüche, wobei die Ratschen-Stellschraube (139, 639) dafür konfiguriert ist, den Aktivierungsabstand (dₐ) zwischen dem ersten und dem zweiten Reibungselement (121; 122) kontinuierlich zu vermindern.

15. Bremsanordnung (100) nach einem der vorangehenden Ansprüche, wobei die Ratschen-Stellschraube (139, 639) dafür konfiguriert ist, den Aktivierungsabstand (dₐ) zwischen dem ersten und dem zweiten Reibungselement (121; 122) gemäß einem schrittweisen Verfahren zu vermindern.

16. Bremsanordnung (100) nach Anspruch 15, wobei zwei aufeinanderfolgende Schritte im schrittweisen Verfahren durch ein Inkrement voneinander getrennt sind, das kleiner oder gleich dem gemeinsamen Toleranzbereich (dₘ) ist.

17. Bremsanordnung (100) nach einem der vorangehenden Ansprüche, wobei der Aktuator (120) dafür konfiguriert ist, in Antwort auf den Empfang des Steuersignals (CS) in Form einer Änderung des Fluiddruckniveaus pneumatisch oder hydraulisch betätigt zu werden.

18. Bremsanordnung (100) nach einem der Ansprüche 1 bis 16, wobei der Aktuator (120) dafür konfiguriert ist, in Antwort auf den Empfang des Steuersignals (CS) in einer elektrischen Form elektromechanisch betätigt zu werden.

## Revendications

1. Ensemble frein (100) pour un véhicule ferroviaire, lequel ensemble frein (100) comporte :
un organe rotatif (110) relié mécaniquement à un essieu de roue du véhicule ferroviaire,
de premier et deuxième organes de friction (121 ; 122) mobiles entre une position en prise (P_{ENG}) respective dans laquelle les premier et deuxième organes de friction (121 ; 122) entrent en contact avec l'organe rotatif (110) à partir de premier et deuxième côtés opposés respectivement, et une position désolidarisée (P_{DIS}) respective dans laquelle les premier et deuxième organes de friction (121 ; 122) sont positionnés à une distance de repos (d_{IDL}) de l'organe rotatif (110),
un actionneur (120) agencé pour obtenir un signal de commande (CS) et, en réponse à celui-ci, commander les premier et deuxième organes de friction (121 ; 122) pour qu'ils atteignent la position en prise (P_{ENG}) respective, et
un mécanisme de réglage (130) configuré pour commander les premier et deuxième organes de friction (121 ; 122) de sorte que, dans la position désolidarisée (P_{DIS}), les premier et deuxième organes de friction (121 ; 122) soient positionnés dans une plage de marge d'articulation (dₘ) à partir de la distance de repos (d_{IDL}) nonobstant toute usure (w) des premier et deuxième organes de friction (121 ; 122), **caractérisé en ce que** le mécanisme de réglage (130) comporte :
un agencement de sondage (131) relié mécaniquement aux premier et deuxième organes de friction (121 ; 122), lequel dispositif de sondage (131) est agencé pour commander les premier et deuxième organes de friction (121 ; 122) de sorte qu'une distance activée (dₐ) séparant les premier et deuxième organes de friction (121 ; 122) l'un de l'autre dans la position en prise (P_{ENG}) respective diminue selon une fonction monotone à mesure que les premier et deuxième organes de friction (121 ; 122) sont usés (w), et lequel agencement de sondage (131) est configuré pour régler la distance activée (dₐ) au moyen d'une interaction entre un organe coulissant (133, 233, 633, 733) et un organe à position fixe (135, 235, 335, 435, 635, 735, 835, 935, 1335) agencés pour interagir l'un avec l'autre le long d'un profil de contact qui comporte au moins un segment incliné (T, T1, T2), et
une vis de commande à cliquet (139, 639) qui est reliée mécaniquement aux premier et deuxième organes de friction (121 ; 122), laquelle vis de commande à cliquet (139) est agencée pour être mise en rotation par l'interaction entre l'organe coulissant (133) et l'organe à position fixe (135, 235, 335, 435, 635, 735, 835, 935, 1335) de manière à réduire progressivement la distance activée (dₐ) en réponse à l'usure (w) des premier et deuxième organes de friction (121 ; 122).

2. Ensemble frein (100) selon la revendication 1, dans lequel :
le premier organe de friction (121) est fixé à un premier bras (123) qui est fixé en rotation à une première articulation (P1) qui, à son tour, est montée excentriquement sur un organe rotatif (132) fixé en rotation à une articulation primaire (PP_{FIX}) qui est montée de manière fixe dans l'ensemble frein (100), et
le deuxième bras (124) est fixé en rotation à une deuxième articulation (P2_{FIX}) qui est montée de manière fixe dans l'ensemble frein (100).

3. Ensemble frein (100) selon la revendication 2, dans lequel :
le mécanisme de réglage (130) comporte l'organe rotatif (132), et
l'organe coulissant (133, 233, 633, 733) est fixé en rotation à la première articulation (P1) de sorte qu'un mouvement du premier bras (123) par rotation de l'organe rotatif (132) autour de l'articulation primaire (PP_{FIX}) amène l'organe coulissant (133, 233, 633, 733) à se déplacer avec le premier bras (123).

4. Ensemble frein (100) selon l'une quelconque des revendications 2 ou 3, dans lequel
l'organe à position fixe (135) comporte un élément de contact, et
l'organe coulissant (133, 633) comporte l'au moins un segment incliné (T, T1, T2) du profil de contact plus un segment rectiligne (S, S1, S2) du profil de contact, dans lequel chacun du segment rectiligne (S, S1, S2) et de l'au moins un segment incliné (T, T1, T2) est agencé pour interagir avec l'élément de contact pendant le fonctionnement de l'ensemble frein (100), le segment rectiligne (S, S1, S2) étant agencé pour interagir avec l'élément de contact de sorte que les premier et deuxième organes de friction (121; 122) soient mobiles entre les positions en prise et désolidarisée (P_{ENG} ; P_{DIS}) respectives sans provoquer de réglage de la vis de commande à cliquet (139, 639), si, dans la position désolidarisée (P_{DIS}) respective, les premier et deuxième organes de friction (121 ; 122) sont positionnées dans la plage de marge d'articulation (dₘ) à partir de la distance de repos (d_{IDL}), et l'au moins un segment incliné (T, T1, T2) est agencé pour interagir avec l'élément de contact de sorte que la distance activée (dₐ) soit réduite dans une mesure qui dépend de la distance sur laquelle l'au moins un segment incliné (T, T1, T2) du profil de contact coulisse contre l'organe à position fixe (135).

5. Ensemble frein (100) selon l'une quelconque des revendications 2 ou 3, dans lequel
l'organe coulissant (233, 733) comporte un élément de contact, et
l'organe à position fixe (235, 335, 435, 635, 735, 835, 935, 1335) comporte l'au moins un segment incliné (T, T1, T2) du profil de contact plus un segment rectiligne (S, S1, S2) du profil de contact, dans lequel chacun du segment rectiligne (S, S1, S2) et de l'au moins un segment incliné (T, T1, T2) est agencé pour interagir avec l'élément de contact, et le segment rectiligne (S, S1, S2) est agencé de sorte que les premier et deuxième organes de friction (121 ; 122) soient mobiles entre les positions en prise et désolidarisée (P_{ENG} ; P_{DIS}) respectives sans provoquer de réglage de la vis de commande à cliquet (139, 639), si, dans la position désolidarisée (P_{DIS}) respective, les premier et deuxième organes de friction (121 ; 122) sont positionnées dans la plage de marge d'articulation (dₘ) à partir de la distance de repos (d_{IDL}), et l'au moins un segment incliné (T, T1, T2) est agencé pour interagir avec l'élément de contact de sorte que la distance activée (dₐ) soit réduite dans une mesure qui dépend de la distance sur laquelle l'élément de contact coulisse contre l'au moins un segment incliné (T, T1, T2).

6. Ensemble frein (100) selon l'une quelconque des revendications 4 ou 5, dans lequel l'au moins un segment incliné (T) comporte un jeu de dents et l'élément de contact comporte un organe rotatif à tête dentée (233, 733) agencé pour venir en prise avec le jeu de dents de l'au moins un segment incliné (T) de manière à provoquer, en réponse à ladite mise en prise, le réglage de la vis de commande à cliquet (139, 639).

7. Ensemble frein (100) selon l'une quelconque des revendications 2 à 6, dans lequel le mécanisme de réglage (130) comporte en outre un organe d'arbre (137) reliant l'agencement de sondage (131) à la vis de commande à cliquet (139, 639), lequel organe d'arbre (137) est agencé pour provoquer une rotation de la vis de commande à cliquet (139, 639) en réponse à l'interaction entre l'organe coulissant (133, 233, 633, 733) et l'organe à position fixe (135, 235, 335, 435, 635, 735, 835, 935, 1335) le long de l'au moins un segment incliné (T) du profil de contact.

8. Ensemble frein (100) selon la revendication 7, dans lequel l'organe coulissant (133, 233, 633, 733) et l'organe à position fixe (135, 235, 335, 435, 635, 735, 835, 935) sont configurés de sorte que :
lorsque chacun des premier et deuxième organes de friction (121 ; 122) est positionné dans la position désolidarisée (P_{DIS}) respective, l'organe coulissant (133, 233, 633, 733) et l'organe à position fixe (135, 235, 335, 435, 635, 735, 835, 935, 1335) entrent en contact l'un avec l'autre en un point sur le segment rectiligne (S, S1, S2) du profil de contact ;
si, lorsque les premier et deuxième organes de friction (121 ; 122) sont positionnés dans les positions en prise (P_{ENG}) respectives, la distance activée (dₐ) dépasse un seuil de réglage, l'organe coulissant (133, 233, 633, 733) et l'organe à position fixe (135, 235, 335, 435, 635, 735, 835, 935, 1335) entrent en contact l'un avec l'autre en un point sur le segment rectiligne (S, S1, S2) du profil de contact ; et
si, lorsque les premier et deuxième organes de friction (121 ; 122) sont positionnés dans les positions en prise (P_{ENG}) respectives, la distance activée (dₐ) est inférieure ou égale au seuil de réglage, l'organe coulissant (133, 233, 633, 733) et l'organe à position fixe (135, 235, 335, 435, 635, 735, 835, 935, 1335) entrent en contact l'un avec l'autre en un point sur le segment incliné (T, T1, T2) du profil de contact, provoquant ainsi un mouvement de translation (M) de l'organe d'arbre (137) le long de son axe de symétrie de sorte que la vis de commande à cliquet (139, 639) soit mise en rotation.

9. Ensemble frein (100) selon la revendication 8, dans lequel la vis de commande à cliquet (139, 639) est agencée entre de première et deuxième articulations pivotantes (PC1 ; PC2), laquelle première articulation pivotante (PC1) est fixée en rotation au premier bras (123) et laquelle deuxième articulation pivotante (PC2) est fixée en rotation au deuxième bras (124), et la vis de commande à cliquet (139, 639) est agencée de sorte que sa rotation provoque :
la séparation des première et deuxième articulations pivotantes (PC1 ; PC2) l'une de l'autre,
la rotation (R) du deuxième bras (124) autour de la deuxième articulation (P2_{FIX}) et
le rapprochement des premier et deuxième organes de friction (121 ; 122) l'un de l'autre.

10. Ensemble frein (100) selon la revendication 9, dans lequel le segment incliné (T) présente une forme convexe, droite ou concave dirigée vers l'axe de symétrie de l'organe d'arbre (137) de sorte que plus l'organe coulissant (133, 233) coulisse le long de l'organe à position fixe (135, 235, 335, 435) sur le segment incliné (T), plus l'organe d'arbre (137) est amené à s'éloigner (M) de l'organe à position fixe le long de son axe de symétrie, provoquant ainsi la rotation de la vis de commande à cliquet (139) autour de son axe dans une première direction (D1).

11. Ensemble frein (100) selon la revendication 9, dans lequel le segment incliné (T, T1, T2) présente une forme concave, droite ou convexe dirigée vers l'axe de symétrie de l'organe d'arbre (137) de sorte que plus l'organe coulissant (633, 733) coulisse le long de l'organe à position fixe (635, 735, 835, 935, 1335) sur le segment incliné (T, T1, T2) plus l'organe d'arbre (137) est amené à se rapprocher (M) de l'organe à position fixe le long de son axe de symétrie, provoquant ainsi la rotation de la vis de commande à cliquet (139) autour de son axe dans une deuxième direction (D2).

12. Ensemble frein (100) selon la revendication 11, comportant un organe compressible agencé pour pousser l'organe coulissant (633, 733) vers l'organe à position fixe (635, 735, 835, 935) tout en permettant à l'organe coulissant (633, 733) de coulisser le long de l'organe à position fixe (635, 735, 835, 935).

13. Ensemble frein (100) selon la revendication 11, dans lequel l'organe à position fixe (1335) comporte un rail de guidage (G) configuré pour guider l'organe coulissant (233) dans l'organe à position fixe (1335) tout au long d'une procédure de freinage dans laquelle les premier et deuxième organes de friction (121 ; 122) sont déplacés entre les positions en prise et désolidarisée (P_{ENG} ; P_{DIS}) respectives, lequel rail de guidage (G) comporte de premier et deuxième segments rectilignes (S1 ; S2) et de premier et deuxième segments inclinés (T1 ; T2) qui sont agencés pour guider l'organe coulissant (233) de sorte que l'organe coulissant (233) soit en contact avec au moins l'un desdits segments (S1, S2, T1, T2) à chaque instant pendant la procédure de freinage.

14. Ensemble frein (100) selon l'une quelconque des revendications précédentes, dans lequel la vis de commande à cliquet (139, 639) est configurée pour réduire en continu la distance activée (dₐ) entre les premier et deuxième organes de friction (121 ; 122).

15. Ensemble frein (100) selon l'une quelconque des revendications précédentes, dans lequel la vis de commande à cliquet (139, 639) est configurée pour réduire la distance activée (dₐ) entre les premier et deuxième organes de friction (121 ; 122) selon une procédure par étapes.

16. Ensemble frein (100) selon la revendication 15, dans lequel deux étapes consécutives dans la procédure par étapes sont séparées l'une de l'autre par un incrément équivalent à une valeur inférieure ou égale à la plage de marge d'articulation (dₘ).

17. Ensemble frein (100) selon l'une quelconque des revendications précédentes, dans lequel l'actionneur (120) est configuré pour être actionné pneumatiquement ou hydrauliquement en réponse à la réception du signal de commande (CS) sous forme de variation d'un niveau de pression de fluide.

18. Ensemble frein (100) selon l'une quelconque des revendications 1 à 16, dans lequel l'actionneur (120) est configuré pour être actionné électromécaniquement en réponse à la réception du signal de commande (CS) dans un format électrique.
